# EUROPÄISCHE PATENTSCHRIFT

(11) **EP 0 461 124 B1**
(45) Veröffentlichungstag und Bekanntmachung des Hinweises auf die Patenterteilung: **24.05.1995**
(21) Anmeldenummer: 90903002.5
(22) Anmeldetag: 21.02.1990
(51) Int. Cl.: F24J 2/14

(54) **SOLARKONZENTRATOR-ANORDNUNG**
SOLAR CONCENTRATOR ARRANGEMENT
CONCENTRATEUR SOLAIRE

(30) Priorität: 01.03.1989 CH 749/89; 16.01.1990 CH 126/90
(43) Veröffentlichungstag der Anmeldung: 18.12.1991
(73) Patentinhaber: Bomin Solar Holding AG, 6302 Zug (CH)
(72) Erfinder: LECHNER, Rudolf, D-7700 Singen (DE)
(86) Internationale Anmeldenummer: DE9000118
(87) Internationale Veröffentlichungsnummer: WO9010182

(56) Entgegenhaltungen:
- EP-A- 0 019 016
- DE-A- 2 733 915
- DE-A- 2 830 335
- DE-A- 2 932 645
- FR-A- 1 319 144
- FR-A- 2 261 489
- FR-A- 2 362 347
- FR-A- 2 497 927
- US-A- 4 051 834
- US-A- 4 136 671
- US-A- 4 543 945
- US-A- 4 548 482
- US-A- 4 552 126
- NTIS Technical Notes, Teil C, 10. Oktober 1984, (Springfield, Virginia, US), R. WINSTON et al.: "Two-Stage Off-Axis Cylindrical Solar Concentrator", Seite 774

## Beschreibung

Die Erfindung betrifft eine Solarkonzentrator-Anordnung gemäß den Obergriffen der Patentansprüche 1 und 16.

Die FR-A-1 319 144 beschreibt eine Solarkonzentrator-Anordnung mit mindestens einem im Querschnitt kreisbogenförmig gekrümmten und Teil einer mit Über- oder Unterdruck beaufschlagten Folien bildenden, verspiegelten Folienstreifen zum Reflektieren von einfallenden Sonnenstrahlen auf einen Wärmetauscher, wobei der verspiegelte Folienstreifen einen länglichen, um seine Längsmittelachse gekrümmten Konzentratorspiegel bildet. Des weiteren sind aus dieser Druckschrift planare Hilfspiegel entnehmbar, die beschreibungsgemäß oberhalb der äußeren Enden des Konzentratorspiegels angeordnet sind. Die derartig angeordneten Hilfsspiegel dienen zur Reflektion von Lichtstrahlen, die neben dem Konzentratorspiegel oder auf dessen Randbereich treffen würden, auf den Verbraucher, wodurch ein höherer Anteil der einfallenden Lichtstrahlen zur Energiegewinnung genutzt werden kann. Allerdings wird aus den entsprechenden Abbildungen deutlich, daß durch die planaren Hilfsspiegel keine Bündelung der reflektierten Strahlung erreicht wird.

Der Erfindung liegt daher die Aufgabe zugrunde, eine Solarkonzentrator-Anordnung vorzugeschlagen, bei welcher der Wärmetauscher durch konzentrierten Strahleneinfall erhitzt wird.

Diese Aufgabe wird erfindungsgemäß gelöst durch eine Solarkonzentrator-Anordnung gemäß den Merkmalen des Patentanspruchs 1 bzw. des Patentanspruchs 16.

Vorteilhafte Weiterbildungen des Erfindungsgedankens sind in den jeweils abhängigen Unteransprüchen angegeben.

Vorteile der Erfindung ergeben sich aus der folgenden Beschreibung mehrerer Ausführungsformen sowie aus den Zeichnungen, auf die Bezug genommen wird. Es zeigen:
Fig. 1 die prinzipielle Anordnung einer Solarkollektor-Einrichtung im Querschnitt;
Fig. 2 eine schaubildliche Skizze der gleichen Einrichtung;
Fig. 3 eine Skizze zur Erläuterung der theoretischen Grundlagen einer bevorzugten Ausführungsform der Erfindung;
Fig. 4 eine weitere Ausführungsform einer Solarkonzentrator-Anordnung in schematischer Darstellung;
Fig. 5 eine praktische Ausführung einer Variante der Solarkonzentrator-Anordnung; und die
Fig. 6 - 8 weitere Varianten der vorgeschlagenen Lösung, als schematische Skizzen dargestellt.

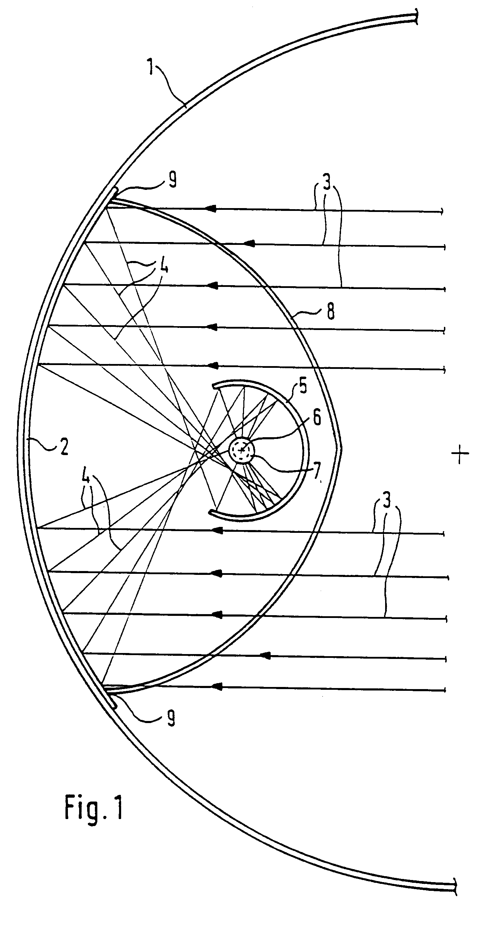

Die vorgeschlagene Solarkonzentrator-Anordnung weist einen Konzentratorspiegel mit einer metallisierten Kunststoffolie zum Reflektieren von parallel einfallenden Lichtstrahlen auf. Dieser wird anstelle der bekannten Zylinderparaboloid-Konzentratoren aus Spiegelglas verwendet und soll eine mindestens gleiche oder sogar bessere Konzentration des einfallenden Sonnenlichts gewährleisten. Der vorgeschlagene Konzentratorspiegel ist auf einer Teilfläche einer im Querschnitt kreisförmigen Kunststoffolie z.B. auf einer Teilfläche eines Kreiszylindermantels angeordnet. Zu diesem Zwecke wird ein Folienschlauch 1 verwendet, welcher hochtransparent ist und eine im Querschnitt kreisförmige Zylinderform hat. Diese Form-wird durch Überdruck im Folienschlauch 1 gesichert. In Fig. 1 ist nur ein Teil des Querschnitts des Folienschlauchs 1 rein schematisch dargestellt.

Ein Streifen des Folienschlauchs 1 weist eine metallisierte Reflexionsschicht auf, welche den Konzentratorspiegel 2 zum Reflektieren von parallel einfallenden Lichtstrahlen 3 bildet.

Diese parallel einfallenden Lichtstrahlen 3 werden auf der Fläche des Konzentratorspiegels 2 abgelenkt, wobei die abgelenkten Strahlen 4 auf die konkave Fläche eines Sekundärkonzentrators 5 fallen, welcher ebenfalls zylindermantelförmig ausgebildet und so gekrümmt und angeordnet ist, dass das gesamte Strahlenbündel exakt in die Brennlinie 6 des Sekundärkonzentrators 5 fällt. Der Sekundärkonzentrator 5 bildet in dieser Weise eine zylindrische, innen verspiegelte Hohlraumlichtfalle mit Brennlinie 6.

In der Brennlinie 6 ist ein Wärmetauscher angeordnet, welcher aus einem Rohr bzw. Wärmetauschrohr 7 besteht, in welchem sich eine Wärmeträgerflüssigkeit befindet, die durch den konzentrierten Strahleneinfall erhitzt wird.

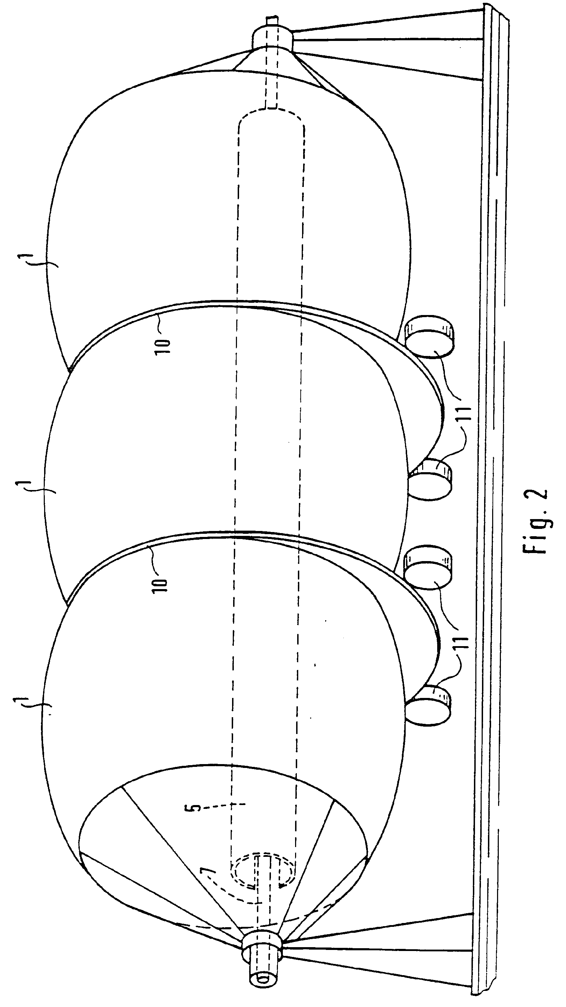

Die Anordnung ist zweckmässigerweise so getroffen, dass die Achse des Rohrs 7 von 0st nach West verläuft (vergl. Fig. 2). Die parallelen Lichtstrahlen 3 bilden mit dieser Ost-West-Achse des Wärmetauscherrohrs 7 eine Ebene, deren Elevationswinkel bei Sonnenauf- und -untergang 0 ist und mittags den jahreszeitlichen Maximalwert einnimmt. Dreht man tageszeitlich den Konzentratorspiegel 2 um das Wärmeaustauschrohr 7, so wird dieses zu jeder Tageszeit optimal bestrahlt, wobei das Rohr 7 nicht bewegt wird und ohne kostspielige Kupplungen direkt an den Wärmekreislauf angeschlossen werden kann. Voraussetzung ist, dass der Konzentratorspiegel 2 und der Sekundärkonzentrator 5 starr miteinander verbunden sind und automatisch dem Sonnenstand entsprechend gedreht werden.

Eine andere Möglichkeit besteht darin, dass der Folienschlauch 1 samt Konzentratorspiegel 2 unbeweglich starr ausgeführt werden, während das Wärmeaustauschrohr 7 entlang eines Kreisbogens dem Sonnenstand nachgeführt wird. In diesem Falle wird das Wärmeaustauschrohr 7 gekröpft geformt und bildet einen Kurbelarm, dessen Kröpfung durch die Drehung des Kurbelarms dem Lichtstrahleinfall entsprechend verstellt wird.

Es sei noch erwähnt, dass in diesem Falle ein grösserer Teil des Folienschlauchs 1 verspiegelt sein muss, so dass der Konzentratorspiegel 2 eine grössere Dimension aufweist. Es besteht ferner die Möglichkeit, eine viel kleinere Folie zu verwenden, indem anstelle des Folienschlauchs 1 ein im Querschnitt linsenförmiges Foliengebilde bzw. Hülle 8 (Fig. 1) zur Verwendung gelangt, welches dann mit einem entsprechenden reflektierenden Überzug versehen wird. Die linsenförmige Hülle 8 wird wiederum beiderends verschlossen und durch Innendruck gespannt. Es ist meistens noch notwendig, einen Halterahmen zu verwenden, welcher die vier Ecken 9 der linsenförmigen Hülle 8 verspannt.

Zurückkommend auf die Ausführung mit kreiszylindermantelförmigem Folienschlauch 1 ist noch zu erwähnen, dass die durch Innendruck gespannte Kunststoffhülle dann mit im Abstand voneinander angeordneten, in parallelen Vertikalebenen liegenden Stützringen 10 versehen wird, wenn es sich um eine sehr lange Kunststoffhülle handelt. Durch die Verwendung der Stützringe 10 wird die Kunststoffhülle tonnenförmig, welche dann mit einer astigmatischen Spiegelfläche versehen ist. Mit Hilfe von Stützringen 10 wird die Kunststoffhülle auf Laufrollen 11 abgestützt, welche Laufrollen 11 auch zur tageszeitlichen Verdrehung der Hülle dienen.

Im Wärmeaustauscherrohr 7 der Solarkollektor-Anordnung wird eine Wärmeträgerflüssigkeit erhitzt und im Kreislauf durch einen Dampferzeuger geführt, wo überhitzter Dampf entsteht, welcher dann eine Turbine mit Generator zur Stromerzeugung antreibt.

Eine weitere, nicht gezeichnete Variante der Solarkollektor-Anordnung sieht vor, dass der Konzentratorspiegel auf der Innenfläche einer stationären Traglufthalle gebildet wird, in welcher eine, auf einer Kreisbahn bewegliche Einheit angeordnet ist, die aus dem Sekundärkonzentrator und dem Wärmetauscher besteht.

Bei den Anordnungen, bei welchen eine lange, kreiszylindermantelförmige Kunststoffhülle Anwendung findet, ist es vorteilhaft, wenn Stützorgane verwendet werden, welche mit den am Anfang und am Ende der Kunststoffhülle angeordneten Halteböcken oder Traggestellen zu einem starren Rahmen verbunden sind. Die Stützorgane können als starre Halbringe oder auch als Seilstützen ausgebildet sein. Selbstverständlich können die beiden Arten von Stützorganen kombiniert angeordnet werden. So ist es vorteilhaft, den oberen Stützring starr auszubilden, während die untere Stütze aus einem Seil bestehen kann, welches beim Prallfüllen der Kunststoffhülle gespannt wird.

Zur Stabilisierung des Schlauchs ist es vorteilhaft, die erwähnten Stabilisierungsringe zu verwenden, welche in axialer Richtung entlang des Schlauchs verteilt angeordnet sind und aus paarweise angeordneten, starren oder biegsamen Teilen bestehen. Es können, wie erwähnt, auch Seilringe verwendet werden, welche beim Aufblasen des Schlauchs gespannt werden. Die beiden Enden des gebildeten Schlauchs werden in geeigneter, an sich bekannter Weise verschlossen. Bei den beschriebenen Ausführungen wird der Konzentratorspiegel auf einer kreiszylinderförmigen Kunststoffolie angeordnet und ein zur Zylinderachse parallel verlaufender Streifen der Kunststoffolie ist mit einem reflektierenden Belag versehen, welcher dann eine spiegelnde Fläche zum Konzentrieren der einfallenden Lichtstrahlen bildet. Die Breite des Streifens ist auf einen Öffnungswinkel beschränkt, bei welchem alle einfallenden Randstrahlen mit akzeptablen optischen Fehlern in der Brennlinie konzentriert werden. Aus optischen Gründen darf dieser Winkel nicht mehr als ca. 30° betragen. Bei einem solchen Winkel kann noch ein Konzentrationsfaktor von ca. c = 46 erreicht werden, welcher zum Erhitzen eines in der Brennlinie angeordneten Wärmetauschers genügt. Bei einem noch so vertretbaren Durchmesser der kreiszylinderförmigen Kunststoffolie ist jedoch der spiegelnde Streifen so schmal, dass nur noch wenig Licht eingefangen und in der Brennlinie konzentriert wird. Wird der spiegelnde Streifen breiter gestaltet, so fallen die Lichtstrahlen aus den Randbereichen, infolge der sphärischen Aberration und infolge Kaustik, nicht mehr in die Brennlinie des Spiegels und tragen nicht zur Energiegewinnung in der Brennlinie bei.

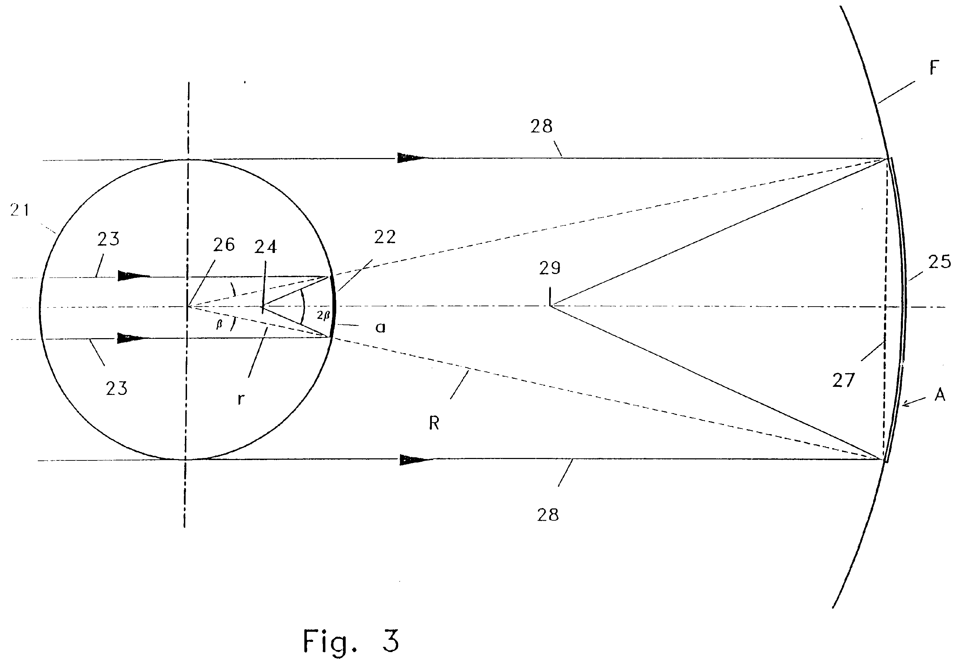

Um diesen Nachteil zu beheben, wurde die Verwendung eines Sekundärkonzentrators vorgeschlagen, welcher die von den Randpartien des spiegelnden Streifen kaustisch reflektierten Lichtstrahlen erfasst und gebündelt auf einen in der Brennlinie des Sekundärkonzentrators angeordneten Wärmetauscher wirft. Die Verwendung des Sekundärkonzentrators kann jedoch vermieden werden, wie dies anhand der Fig. 3 - 8 erklärt wird.

Es wird nun eine Solarkonzentrator-Anordnung beschrieben, welche keine grössere Breite aufweist als eine Solarkonzentrator-Anordnung mit kreiszylinderförmigem und druckbeaufschlagten Schlauch aus Kunststoffolie, wobei jedoch eine viel höhere Nutzung erreicht wird, obwohl nur ein Konzentratorspiegel, nicht aber ein Sekundärkonzentrator Verwendung findet. Darüber hinaus soll es bei bevorzugten Ausführungen möglich sein, den Wärmetauscher ausserhalb des druckbeaufschlagten Raumes unterzubringen.

Es wird zunächst aus der in Fig. 3 dargestellten Anordnung ausgegangen, welche die theoretischen Grundlagen der vorgeschlagenen Variante veranschaulichen.

In dieser Fig. 3 ist mit 21 ein zylinderförmiger hochtransparenter Kunststoffschlauch bezeichnet, welcher unter Druck steht und einen Streifen 22 aufweist, der mit einem spiegelnden Überzug versehen ist. Die Streifenbreite ist so gewählt, dass der Streifen 22 eine Fläche im Bereiche eines Zentriwinkels β = 30° umfasst. Der Zylinderradius des Kunststoffschlauchs ist mit r und die der Streifenbreite entsprechende Bogenlänge mit a bezeichnet. Bei dieser Anordnung werden höchstens noch die Randstrahlen 23 in die Brennlinie 24 des als Spiegel wirkenden Streifens 22 reflektiert und zwar mit einem Konvergenzwinkel von ca. 2β = 60°.

Jetzt wird der allein wirksame Ausschnitt des zylinderförmigen Kunststoffschlauchs 21, und zwar der Streifen 22, nach dem Ähnlichkeitsgesetz vergrössert, auf einen bogenförmigen Streifen 25 projiziert, welcher die gleiche Mittelachse 26 wie der zylinderförmige Kunststoffschlauch 21 besitzt und einen Radius R aufweist, bei welchem die Sehne 27 keinesfalls grösser ist als der Durchmesser 2r des Kunststoffschlauchs 21. Der in dieser Weise eindeutig definierte bogenförmige Streifen 25 weist einen spiegelnden Belag auf, welcher alle einfallenden Sonnenstrahlen, soweit diese innerhalb der Randstrahlen 28 liegen, in die Brennlinie 29 reflektiert.

Aus der Darstellung der Fig. 3 ist es ferner ersichtlich, dass bei der Verwendung der konventionellen Anordnung mit einem Kunststoffschlauch 21 mit dem Radius r die effektiv wirksame Projektionsfläche einer Fläche entspricht, welche breitenmässig durch den Streifen 22 bestimmt wird. Der Streifen 22 ist durch den Zentriwinkel β = 30° und durch den Konvergenzwinkel von 2β = 60° bei gegebenem Radius r eindeutig definiert. Daraus kann die für die Fläche massgebliche Bogenlänge a des Streifens 22 leicht berechnet werden: a = 2·r·pi/β. Die Bogenlänge des Streifens 25 beträgt analog: 2·R·pi/β. Daraus folgt a/A = r/R = sin β/2 = sin 15° = 0,25882. Dies ergibt schliesslich: A = 1/0,25882 = 3,86370·a. Bei gleichem durch r bestimmten Platzbedarf steht also eine beinahe viermal grössere Fläche zum wirksamen Erfassen von einfallenden Lichtstrahlen zur Verfügung. Es sei noch erwähnt, dass bei dem gewählten Zentriwinkel von 30° sich eine annähernd vierzigfache Konzentration d.h. eine vierzigfache Verdichtung der eingestrahlten Sonnenenergie ergibt, so dass genügend Wärme für einen Wärmetauscher zur Verfügung steht.

Erfindungsgemäss wird also nicht mehr ein Kunststoffschlauch verwendet, sondern ein metallisierter Folienstreifen, welcher um seine Längsmittellinie gleichmässig gekrümmt und im Sinne der vorangehenden Ausführungen berechnet wurde, wobei in der Brennlinie ein Wärmetauscher angeordnet ist.

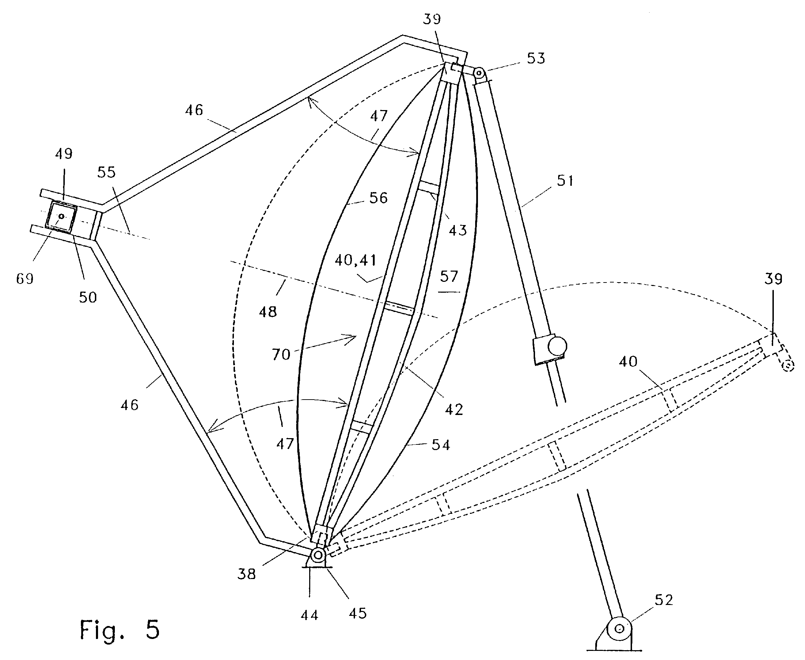

Eine praktische Ausführung eines zur Herstellung der Solarkonzentrator-Anordnung geeigneten Folienstreifens ist in Fig. 4 dargestellt.

Nachdem im Sinne der vorangehenden Ausführungen die in Fig. 3 mit 27 bezeichnete Sehne für den praktischen Fall berechnet wurde, wird ein Rahmen erstellt, welcher rechteckig ist und aus zwei kurzen Streben 30 sowie aus zwei langen Streben 31 zusammengefügt ist. Die Länge der kurzen Streben 30 entspricht dabei der berechneten Länge der Sehne 27, während die Länge der Streben 31 sich nach praktischen bzw. konstruktiven Gesichtspunkten ergibt.

An den beiden langen Streben 31 wird eine mit einem spiegelnden Belag versehene, ebenfalls viereckige Kunststoffolie 32 entlang ihren beiden Längsseiten befestigt, weiche Längsseiten genauso lang sind wie die Streben 30. Die Länge der Breitseiten 33 der spiegelnden Kunststoffolie 32 entspricht der Bogenlänge A in Fig. 3 und kann entsprechend berechnet werden, indem jetzt wieder von einem Zentriwinkel β = 30° ausgegangen wird. Die spiegelnde Kunststoffolie 32 kann also massgenau zugeschnitten und an den beiden langen Streben 31 auf der einen Seite des Rahmens befestigt werden.

Ferner wird auf der anderen Seite des Rahmens eine gleich grosse transparente Folie 34 befestigt, so dass ein schlauchartiges Gebilde entsteht, welches an beiden Enden luftdicht abgeschlossen wird. Dazu dienen z.B. (nicht gezeigte) Abschlussfolien. Zur Versteifung des Rahmens sind Querstreben 36 vorhanden, welche die beiden Längsstreben 31 zickzack-förmig verbinden.

In der Brennlinie 37 der spiegelnden Kunststoffolie 32 ist ein Receiverrohr 37a angeordnet, welches durch eine Wärmeträger-Flüssigkeit in bekannter Weise durchströmt wird. Je nach Abmessung der spiegelnden Kunststoffolie 32 befindet sich die Brennlinie 37 innerhalb oder ausserhalb des durch die spiegelnde Kunststoffolie 32 und die transparente Folie 34 begrenzten Raums, welcher sich ergibt, nachdem der genannte Zwischenraum mit Druckluft gefüllt wurde. Dadurch werden die Folien 32 und 34 gespannt und nehmen die Betriebslage ein. Dazu gehört auch, dass die Brennlinie 37 der O-W-Achse entsprechend ausgerichtet wird.

Eine andere zweckmässige Ausführung ist aus Fig. 5 ersichtlich, welche eine Solarkonzentrator-Anordnung in Seitenansicht zeigt. Hier findet ein Rahmen 70 mit Längsstreben 38, 39 und Querstreben 40, 41 Verwendung, welche durch leicht gebogene Hilfsstreben 42 und Abstandsstücke 43 versteift sind. Der Rahmen 70 ist in einer Lagerstütze 44 in der Vertikalebene schwenkbar gelagert und die Anordnung ist so getroffen, dass die Schwenkachse 45 der Lagerung in Bodennähe horizontal und parallel zu den Längsstreben 38 und 39 verläuft.

Ferner ist der Rahmen 70 mit zwei Auslegern 46 versehen, die im Bereiche der beiden Längsstreben 38 und 39 befestigt sind, mit der Ebene des Rahmens 70 den gleichen Winkel 47 einschliessen und im Bereiche der zum Rahmen 70 senkrechten Mittelebene 48 einen Halter 49 bilden, welcher exakt in der zur Zeichnungsebene senkrecht verlaufenden Brennlinie 69 eines reflektierenden Folienstreifens 54 liegt, der über dem Rahmen 70 gespannt wird, wie dies noch zu beschreiben ist. Die beiden Ausleger 46 sind so am Rahmen 70 befestigt, dass sie die Schwenkbewegungen des Rahmens 70 mitmachen, wobei die Lage des Halters 49 immer in der Brennlinie 69 verbleibt.

Im Halter 49 ist ein Wärmetauscher 50 angeordnet, welcher sich in der Brennlinie 69 erstreckt und von einem liquiden Wärmeträger durchströmt wird.

Zum Schwenken und Festhalten des Rahmens 70 nebst Wärmetauscher 50 ist ein Teleskoprohr 51 vorgesehen, welches an einem Ende in einen Lager 52 schwenkbar befestigt und am anderen Ende bei der Anschlussstelle 53 mit den oberen Längsstreben 39 ebenfalls schwenkbar verbunden ist. Durch die Verkürzung und Schwenkung des Teleskoprohrs 51 kann der Rahmen 70 aus der voll gezeichneten Lage in die strickpunktiert gezeichnete Stellung gebracht werden.

Die dem Wärmetauscher 50 abgekehrte Seite des Rahmens 70 wird mit dem reflektierenden Folienstreifen 54 versehen, dessen Breite in der eingangs beschriebenen Weise bestimmt wird, und welcher einen reflektierenden Spiegel bildet, dessen Brennlinie 69 in der Mittelachse des Wärmetauschers 50 liegt.

Die andere, dem Wärmetauscher 50 zugekehrte Seite des Rahmens 70 trägt eine transparente Folie 56 und der Zwischenraum 57 zwischen den beiden Folien 54 und 56 wird an beiden Enden durch geeignete Abschlussplatten verschlossen. In dieser Weise kann im Zwischenraum 57 Überdruck erzeugt werden, welcher die beiden Folien 54 und 56 gespannt hält, wobei der reflektierende Folienstreifen 54 die voraus berechnete Form einnehmen wird.

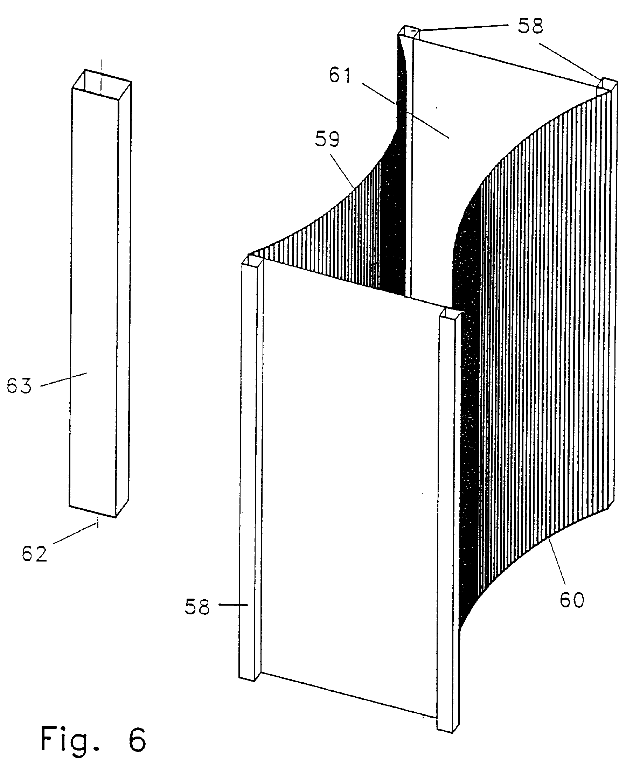

Eine weitere Ausführungsform des Erfindungsgegenstandes ist in Fig. 6 schematisch dargestellt. Hier wird ein Fachwerkrahmen 58 verwendet, welcher auf der einen Seite mit einer Spiegelfolie 59 und auf der anderen Seite mit einer billigen, u.U. undurchsichtigen Folie 60 bespannt wird. Der Fachwerkrahmen 58 ist bis auf die beiden bespannten Seiten verschlossen, so dass zwischen den Folien 59 und 60 ein luftdicht abgeschlossener Raum 61 verbleibt, welcher evakuiert wird. Durch den Unterdruck nimmt dann die Spiegelfolie 59 (und auch die billige Folie 60) die gewünschte Form an, welche in der eingangs beschriebenen Weise berechnet wird. In der Brennlinie 62 der Spiegelfolie 59 wird ein Wärmetauscher 63 angeordnet, wobei auf die konstruktiven Einzelheiten hier nicht näher eingegangen wird. Der Zentriwinkel beträgt wieder 30° und der Konvergenzwinkel 60°, so dass mit einem Konzentrationsfaktor von c = 46 gerechnet werden kann.

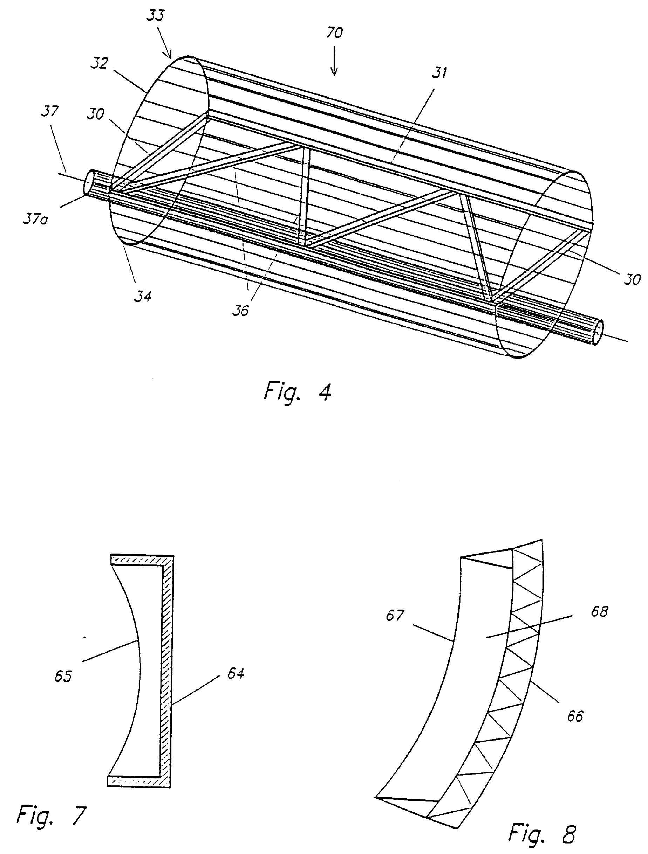

Anstelle der beschriebenen Fachwerkkonstruktion kann auch eine Bauweise angewendet werden, welche aus Fig. 7 hervorgeht. Hier wird eine den endgültigen Abmessungen einer Spiegelfolie 65 entsprechende Schublade 64 verwendet, welche mit der Spiegelfolie 65 bespannt wird, wobei in der Schublade 64 wieder Unterdruck herrscht. Die Schublade 64 kann auch durch eine biegesteife Sandwichkonstrüktion 66 gemäss Fig. 8 ersetzt werden, welche wiederum mit einer Spiegelfolie 67 überdeckt und durch Unterdruck im Zwischenraum 68 in die erwünschte Form gebracht wird. Die Berechnung der Spiegelfolie 67 erfolgt analog wie beschrieben.

Die zuletzt beschriebenen Ausführungsformen sind besonders vorteilhaft, da sie eine einfachere und billigere Herstellung und Montage der Solarkonzentrator-Anlage ermöglichen. Insbesondere fällt die Verwendung einer transparenten Folie ganz weg oder kann durch eine billige, nicht durchsichtige Folie ersetzt werden. Bei allen Ausführungsformen ist es wesentlich, dass bei Störungen keine Gefahr besteht, dass die als Fenster dienende transparente Folie durchbrennt, da der Konzentrationsfaktor der erwähnten billigen Folie etwa bei c = 2 liegt.

Ferner ist der Wirkungsgrad der zuletzt beschriebenen Anlagen noch besser, da die einfallenden Strahlen nicht durch eine transparente Folie passieren müssen, wo ein Teil der Strahlung abgelenkt wird und verlustig geht.

Schliesslich ist es vorteilhaft, wenn der Wärmetauscher nicht im Raum angeordnet ist, wo Über- oder Unterdruck herrscht, sondern frei zugänglich ist, so dass er leicht justiert, ersetzt oder repariert werden kann.

## Patentansprüche

1. Solarkonzentrator-Anordnung mit mindestens einem im Querschnitt kreisbogenförmig gekrümmten und Teil einer mit Über- oder Unterdruck beaufschlagten Folie (1) bildenden, verspiegelten Folienstreifen zum Reflektieren von einfallenden Sonnenstrahlen auf einen Wärmetauscher (7), wobei der verspiegelte Folienstreifen einen länglichen, um seine Längsmittelachse gekrümmten Konzentratorspiegel (2) bildet,
**dadurch gekennzeichnet**, daß der Folienstreifen mit einem zylindermantelförmig ausgebildeten Sekundärkonzentrator (5) zusammenarbeitet, in dessen Brennlinie der Wärmetauscher (7) angeordnet ist, so daß er die vom Konzentratorspiegel (2) reflektierten Lichtstrahlen (4) gebündelt auf den Wärmetauscher (7) wirft.

2. Solarkonzentrator-Anordnung nach Anspruch 1,
**dadurch gekennzeichnet**, daß der Konzentratorspiegel (2) und der Sekundärkonzentrator (5) miteinander zu einer Einheit verbunden sind, und daß zwischen dieser Einheit und dem Wärmetauscher (7) eine relative Drehverstellbarkeit besteht.

3. Solarkonzentrator-Anordnung nach Anspruch 2,
**dadurch gekennzeichnet**, daß der Konzentratorspiegel (2) auf der inneren oder äußeren Seite einer kreiszylindermantelförmigen Kunststoffhülle (1) gebildet ist, welche eine horizontale Achse aufweist, beiderends verschlossen und durch Innendruck gespannt ist.

4. Solarkonzentrator-Anordnung nach Anspruch 3,
**dadurch gekennzeichnet**, daß die durch Innendruck gespannte, beiderends in Halteböcken abgestützte Kunststoffhülle (1) mit ringförmigen Stützorganen (10) ausgerüstet ist, welche konzentrisch zum Wärmetauscher (7) angeordnet sind.

5. Solarkonzentrator-Anordnung nach Anspruch 4,
**dadurch gekennzeichnet**, daß die Stützorgane (10) mit den Halteböcken zu einem starren Rahmen verbunden sind.

6. Solarkonzentrator-Anordnung nach Anspruch 5,
**dadurch gekennzeichnet**, daß die Stützorgane als starre Halbringe oder als Seilstützen ausgebildet sind.

7. Solarkonzentrator-Anordnung nach Anspruch 6,
**dadurch gekennzeichnet**, daß die Kunststoffhülle (1) aus zwei Bahnen besteht, welche entlang ihren korrespondierenden Kanten mittels Klemmschienen luftdicht zusammengefaßt sind.

8. Solarkonzentrator-Anordnung nach Anspruch 7,
**dadurch gekennzeichnet**, daß an den Klemmschienen Seile oder starre Halbringe befestigt sind, welche Stützorgane bilden.

9. Solarkonzentrator-Anordnung nach Anspruch 3,
**dadurch gekennzeichnet**, daß die Kunststoffhülle (1) zylindrisch oder tonnenförmig ausgebildet ist und eine astigmatische Spiegelfläche bildet.

10. Solarkonzentrator-Anordnung nach Anspruch 2,
**dadurch gekennzeichnet**, daß die Einheit (2, 5) gegenüber dem und um den Wärmetauscher (7) drehverstellbar angeordnet ist.

11. Solarkonzentrator-Anordnung nach Anspruch 2,
**dadurch gekennzeichnet**, daß die Einheit (2, 5) starr und der Wärmetauscher (7) gegenüber der Einheit (2, 5) verstellbar angeordnet ist.

12. Solarkonzentrator-Anordnung nach Anspruch 11,
**dadurch gekennzeichnet**, daß der Wärmetauscher (7) gekröpft geformt ist und einen Kurbelarm bildet, dessen Kröpfung bezüglich der Einheit (2, 5) dem Lichtstrahleneinfall entsprechend, verstellbar ist.

13. Solarkonzentrator-Anordnung nach Anspruch 12,
**dadurch gekennzeichnet**, daß der Konzentratorspiegel (2) auf der einen Hälfte einer im Querschnitt linsenförmigen Kunststoffhülle (8) mit horizontaler Achse ausgebildet ist, welche Hülle (8) beiderends verschlossen und durch Innendruck gespannt ist.

14. Solarkonzentrator-Anordnung nach Anspruch 13,
**dadurch gekennzeichnet**, daß die linsenförmige, gespannte Hülle (8) mit einem Halterahmen eingefaßt ist.

15. Solarkonzentrator-Anordnung nach Ansprüchen 1 und 2,
**dadurch gekennzeichnet**, daß der Konzentratorspiegel (2) auf der Innenfläche einer stationären Traglufthalle gebildet ist, in welcher die auf einer Kreisbahn bewegliche Einheit angeordnet ist.

16. Solarkonzentrator-Anordnung mit mindestens einem im Querschnitt kreisbogenförmig gekrümmten und Teil einer mit Über- oder Unterdruck beaufschlagten Folie bildenden, verspiegelten Folienstreifen zum Reflektieren von einfallenden Sonnenstrahlen auf einen Wärmetauscher,
**dadurch gekennzeichnet**, daß der Folienstreifen (25) die zentralprojizierte Abbildung des reflektierenden Teils (22) eines gedachten kreiszylinderförmigen Folienschlauchkonzentrators (21) auf eine wenigstens annähernd kreisbogenförmige Fläche (F) ist, die um die Mittelachse (26) des Kreiszylinders des Folienschlauchkonzentrators (21) mit einem gegebenen Radius (R) gekrümmt ist, welche Abbildung des Folienstreifens (25) den gleichen Zentriwinkel (β) und das gleiche Zentrum (26) wie der reflektierende Teil (22) des Kreiszylinders des Folienschlauchkonzentrators (21) aufweist und der Radius (R) nicht größer ist als der Radius (r) des Folienschlauchkonzentrators (21) geteilt durch den Sinuswert des halben Zentriwinkels (β) und daß der Wärmetauscher (37a; 50; 63) in der Brennlinie (37; 69) der spiegelnden Folie (32; 54; 59; 65; 67) angeordnet ist.

17. Solarkonzentrator-Anordnung nach Anspruch 16,
**dadurch gekennzeichnet**, daß dieselbe einen Rahmen (30, 31) aufweist, welcher mit der spiegelnden Folie (32) auf der einen Seite und mit einer Klarsichtfolie (34) auf der anderen Seite bedeckt ist, wobei der Raum zwischen Folien luftdicht verschlossen ist und unter erhöhtem Druck steht.

18. Solarkonzentrator-Anordnung nach Anspruch 16,
**dadurch gekennzeichnet**, daß dieselbe einen um eine horizontale Achse (45) schwenkbar angeordneten Rahmen (70) besitzt, welcher mit dem reflektierenden Folienstreifen (54) auf der einen und mit einer Klarsichtfolie (56) auf der anderen Rahmenseite überdeckt ist, welche Folien (54, 56)einen Raum (57) mit erhöhtem Druck begrenzen, wobei in der außerhalb des Druckraums (57) liegenden Brennlinie (69) des reflektierenden Folienstreifens (54) der Wärmetauscher (50) mit dem Rahmen (70) schwenkbar verbunden angeordnet ist.

19. Solarkonzentrator-Anordnung nach Anspruch 16 oder 18,
**dadurch gekennzeichnet**, daß der Rahmen (70) mit zwei Auslegern (46) versehen ist, die mit der Rahmenebene den gleichen Winkel (47) einschließen und im Bereich der zum Rahmen (70) senkrechten Mittelebene (48) einen in der Brennlinie (69) des reflektierenden Folienstreifens (54) liegenden Halter (49) zur Aufnahme des Wärmetauschers (50) bilden.

20. Solarkonzentrator-Anordnung nach Ansprüchen 16, 18 und 19,
**dadurch gekennzeichnet**, daß zum Schwenken und Festhalten des Rahmens (70) nebst Wärmetauscher (50) ein Teleskoprohr (51) vorgesehen ist, welches an einem Ende schwenkbar am Boden befestigt und am anderen Ende mit dem Rahmen (70) schwenkbar verbunden ist.

21. Solarkonzentrator-Anordnung nach Anspruch 16,
**dadurch gekennzeichnet**, daß dieselbe einen Fachwerkrahmen (58) aufweist, welcher auf der einen Seite mit der spiegelnden Folie (59) und auf der anderen Seite mit einer Abschlußfolie (60) versehen ist, wobei im abgeschlossenen Zwischenraum (61) zwischen den Folien (59, 60) Unterdruck herrscht.

22. Solarkonzentrator-Anordnung nach Anspruch 16,
**dadurch gekennzeichnet**, daß dieselbe eine schubladenförmige, dreiseitig abgeschlossene Halterung (64) zur Aufnahme der spiegelnden Folie (65) aufweist, welche durch Vakuum in der schubladenförmigen Halterung (64) festgehalten ist.

23. Solarkonzentrator-Anordnung nach Anspruch 16,
**dadurch gekennzeichnet**, daß dieselbe eine biegesteife Sandwichkonstruktion (66) aufweist, die mit der spiegelnden Folie (67) überdeckt ist, wobei zwischen der der spiegelnden Folie (67) zugekehrten Fläche der Sandwichkonstruktion und der spiegelnden Folie (67) ein abgeschlossener Raum (68) vorhanden ist, in welchem Unterdruck herrscht, der die spiegelnde Folie (67) in der berechneten Form hält.

## Claims

1. An arrangement of solar concentrators having for the purpose of reflecting incident sun rays onto a heat exchanger (7) at least one reflector sheet strip which has a curved cross-section and forms part of a sheeting (1) which is subjected to high pressure and to negative pressure, wherein the reflector sheet strip forms a longitudinal concentrator mirror (2) which is curved about its longitudinal middle axis, characterised in that the sheet strip cooperates with a secondary concentrator (5) which has a cylindrical peripheral shape and the heat exchanger (7) is disposed in the focal line thereof, so that it throws bundles of light beams (4), which are reflected by the concentrator mirror (2) onto the heat exchanger (7).

2. An arrangement of solar concentrators according to claim 1, characterised in that the concentrator mirror (2) and the secondary concentrator (5) are connected to each other to form one unit and that there is relative rotatability between this unit and the heat exchanger (7).

3. An arrangement of solar concentrators according to claim 2, characterised in that the concentrator mirror (2) is formed on the inner or outer side of a synthetic sleeve (1), which sleeve comprises a circular cylindrical periphery and a horizontal axis and is closed at both ends and stressed by an internal pressure.

4. An arrangement of solar concentrators according to claim 3, characterised in that the synthetic sleeve (1), which is stressed by an internal pressure and both ends of which are supported in retaining frames, is equipped with annular support members (10) which are disposed in a concentric manner with respect to the heat exchanger (7).

5. An arrangement of solar concentrators according to claim 4, characterised in that the support members (10) are connected by the retaining frames to a rigid framework.

6. An arrangement of solar concentrators according to claim 5, characterised in that the support members are formed as rigid half-rings or as cable supports.

7. An arrangement of solar concentrators according to claim 6, characterised in that the synthetic sleeve (1) consists of two sheets which are held together in an air-tight manner along their corresponding edges by means of clamping rails.

8. An arrangement of solar concentrators according to claim 7, characterised in that cables or rigid half-rings, which form the support members, are attached to the clamping rails.

9. An arrangement of solar concentrators according to claim 3, characterised in that the synthetic sleeve (1) is of a cylindrical or barrel shape and forms an astigmatic mirror surface.

10. An arrangement of solar concentrators according to claim 2, characterised in that the unit (2, 5) is disposed in such a manner as to be able to rotate with respect to and about the heat exchanger (7).

11. An arrangement of solar concentrators according to claim 2, characterised in that the unit (2, 5) is disposed in a rigid manner and the heat exchanger (7) is disposed in such a manner as to be able to be displaced with respect to the unit (2, 5).

12. An arrangement of solar concentrators according to claim 11, characterised in that the heat exchanger (7) is bent at right angles and forms a crank arm, the right-angled bend of which can be adjusted with respect to the unit (2, 5) according to the incidence of the light rays.

13. An arrangement of solar concentrators according to claim 12, characterised in that the concentrator mirror (2) is formed on one half of a lenticular cross-section shaped synthetic sleeve (8) with a horizontal axis and which sleeve (8) is closed at both ends and is stressed by an internal pressure.

14. An arrangement of solar concentrators according to claim 13, characterised in that the lenticular, stressed sleeve (8) is enclosed by a retaining framework.

15. An arrangement of solar concentrators according to claims 1 and 2, characterised in that the concentrator mirror (2) is formed on the inner surface of a stationary air-inflated structure, in which is disposed the unit which moves in an orbit.

16. An arrangement of solar concentrators having for the purpose of reflecting incident sun rays onto a heat exchanger (7) at least one reflected sheet strip which has a curved cross-section and forms part of a sheeting (1) which is subjected to high pressure and to negative pressure, characterised in that the sheet strip (25) is the centrally projected image of the reflecting part (22) of an imaginary circular cylindrical sheet hose concentrator (21) onto at least an almost circular curved surface (F), which is curved with a predetermined radius (R) about the middle axis (26) of the circular cylinder of the sheet hose concentrator (21), which image of the sheet strip (25) comprises the identical central angle (β) and the same centre (26) as the reflecting part (22) of the circular cylinder of the sheet hose concentrator (21) and the radius (R) is not greater than the radius (r) of the sheet hose concentrator (21) divided by the sine value of the half central angle (β) and that the heat exchanger (37a; 50; 63) is disposed in the focal line (37; 69) of the reflecting sheet (32; 54; 59; 65; 67).

17. An arrangement of solar concentrators according to claim 16, characterised in that the said arrangement comprises a framework (30, 31) which is covered on one side by the reflecting sheet (32) and on the other side by a transparent sheet (34), wherein the chamber between the sheets is sealed in an air-tight manner and is more highly pressurized.

18. An arrangement of solar concentrators according to claim 16, characterised in that the said arrangement comprises a framework (70) disposed in such a manner as to be able to pivot about a horizontal axis (45), which framework is covered on one frame side by the reflecting sheet strip (54) and on the other side by a transparent sheet (56), which sheets (54, 56) define a chamber (57) with increased pressure, wherein the heat exchanger (50) connected to the framework (70) in a pivotably manner is disposed in the focal line (69) of the reflecting sheet strip (54) lying outside the pressure chamber (57).

19. An arrangement of solar concentrators according to claim 16 or 18, characterised in that the framework (70) is provided with two brackets (46) which include the same angle (47) with the framework plane and in the region of the middle plane (48) perpendicular to the framework (70) form a retainer (49) lying in the focal line (69) of the reflecting sheet strip (54) for the purpose of accommodating the heat exchanger (50).

20. An arrangement of solar concentrators according to claims, 16, 18 and 19, characterised in that for the purpose of pivoting and fixedly holding the framework (70) and the heat exchanger (50) a telescopic tube (51) is provided, which tube is attached at one end in a pivotable manner to the base and connected at the other end in a pivotable manner to the framework (70).

21. An arrangement of solar concentrators according to claim 16, characterised in that the said arrangement comprises a square framework (58) which is provided on one side with a reflecting sheet (59) and on the other side with an end sheet (60), wherein there is a negative pressure in the sealed intermediate chamber (61) between the sheets (59, 60).

22. An arrangement of solar concentrators according to claim 16, characterised in that the said arrangement comprises a drawer-shaped, three-sided closed retaining device (64) for the purpose of receiving the reflecting sheet (65), which is firmly held in the drawer-shaped retaining device (64) by virtue of the vacuum.

23. An arrangement of solar concentrators according to claim 16, characterised in that the said arrangement comprises a deflection resistant sandwich construction (66), which is covered with the reflecting foil (67), wherein provided between the surface of the sandwich construction facing the reflecting sheet (67) and the reflecting sheet (67) is a sealed chamber (68) in which there is a negative pressure which maintains the reflecting sheet (67) in the predetermined shape.

## Revendications

1. Concentrateur solaire avec au moins une bande réfléchissante cintrée transversalement en arc de cercle, faisant partie d'une feuille (1) soumise à une surpression ou à une dépression et servant à réfléchir, sur un échangeur de chaleur (7), les rayons solaires incidents, dans lequel la bande réfléchissante forme un miroir concentrateur (2) de forme allongée, cintré selon son axe longitudinal,
caractérisé en ce que la bande réfléchissante fonctionne en coopération avec un concentrateur secondaire (5) ayant la forme d'une enveloppe cylindrique et dans l'axe focal duquel est placé l'échangeur de chaleur (7), de telle sorte qu'il focalise sur l'échangeur de chaleur (7) les rayons lumineux (4) réfléchis par le miroir concentrateur (2).

2. Concentrateur solaire selon la revendication 1, caractérisé en ce que le miroir concentrateur (2) et le concentrateur secondaire (5) sont assemblés pour former une seule unité et en ce qu'il est prévu, entre cette unité et l'échangeur de chaleur (7), une possibilité de réglage relatif en rotation.

3. Concentrateur solaire selon la revendication 2, caractérisé en ce que le miroir concentrateur (2) est formé sur la face interne ou externe d'une enveloppe en plastique (1) en forme de cylindre circulaire à axe horizontal, fermée à ses deux extrémités et tendue par une surpression interne.

4. Concentrateur solaire selon la revendication 3, caractérisé en ce que l'enveloppe en plastique (1), tendue par une surpression interne et soutenue à ses deux extrémités par des chevalets supports, est dotée d'éléments supports (10) en forme d'anneau qui sont disposés de façon concentrique par rapport à l'échangeur de chaleur (7).

5. Concentrateur solaire selon la revendication 4, caractérisé en ce que les éléments supports (10) sont reliés aux chevalets supports pour former un cadre rigide.

6. Concentrateur solaire selon la revendication 5, caractérisé en ce que les éléments supports se présentent sous la forme de demi-anneaux rigides ou bien de supports à câbles.

7. Concentrateur solaire selon la revendication 6, caractérisé en ce que l'enveloppe en plastique (1) est constituée par deux bandes qui sont assemblées le long de leurs bords correspondants, de façon étanche à l'air, au moyen de profils de serrage.

8. Concentrateur solaire selon la revendication 7, caractérisé en ce que, sur les profils de serrage, des câbles ou des demi-anneaux rigides sont fixés pour constituer les éléments supports.

9. Concentrateur solaire selon la revendication 3, caractérisé en ce que l'enveloppe en plastique (1) est de forme cylindrique ou en tonneau et constitue une surface réfléchissante astigmatique.

10. Concentrateur solaire selon la revendication 2, caractérisé en ce que l'unité (2, 5) est disposée de façon à être réglable en rotation par rapport à - et autour de - l'échangeur de chaleur (7).

11. Concentrateur solaire selon la revendication 2, caractérisé en ce que l'unité (2, 5) est fixe et que l'échangeur de chaleur (7) est disposé de façon à être réglable par rapport à l'unité (2, 5).

12. Concentrateur solaire selon la revendication 11, caractérisé en ce que l'échangeur de chaleur (7) est coudé et forme un bras de manivelle dont la courbure est réglable par rapport à l'unité (2, 5), en fonction de l'incidence des rayons lumineux.

13. Concentrateur solaire selon la revendication 12, caractérisé en ce que le miroir concentrateur (2) est formé sur l'une des moitiés d'une enveloppe en plastique (8) transversalement en forme de lentille, à axe horizontal, ladite enveloppe (8) étant fermée à ses deux extrémités et tendue par une surpression interne.

14. Concentrateur solaire selon la revendication 13, caractérisé en ce que l'enveloppe en plastique (8), en forme de lentille et tendue, est maintenue par un cadre support.

15. Concentrateur solaire selon l'une ou l'autre des revendications 1 ou 2, caractérisé en ce que le miroir concentrateur (2) est formé sur la face interne d'une structure gonflable fixe à l'intérieur de laquelle l'unité peut se déplacer selon une trajectoire circulaire.

16. Concentrateur solaire avec au moins une bande réfléchissante cintrée transversalement en arc de cercle, faisant partie d'une feuille soumise à une surpression ou à une dépression et servant à réfléchir les rayons solaires arrivant sur un échangeur de chaleur, caractérisé en ce que la bande (25) est l'image projetée au centre de la partie réfléchissante (22) d'un concentrateur imaginaire à feuille tubulaire (21) de forme cylindrique circulaire, sur une surface au moins à peu près en arc de cercle (F) qui présente un rayon de courbure (R) donné par rapport à l'axe central (26) du cylindre circulaire du concentrateur à feuille tubulaire (21), ladite image de la bande (25) ayant le même angle au centre (β) et le même centre (26) que la partie réfléchissante (22) du cylindre circulaire du concentrateur à feuille tubulaire (21), ledit rayon (R) n'étant pas supérieur au rayon (r) du concentrateur à feuille tubulaire (21) divisé par le sinus du demi-angle au centre (β), et en ce que l'échangeur de chaleur (37a ; 50 ; 63) est disposé dans l'axe focal (37 ; 69) de la feuille réfléchissante (32 ; 54 ; 59 ; 65 ; 67).

17. Concentrateur solaire selon la revendication 16, caractérisé en ce que celui-ci est doté d'un cadre (30, 31) qui est recouvert, d'un côté par la feuille réfléchissante (32) et de l'autre côté par une feuille transparente (34), l'espace entre les feuilles étant fermé de façon étanche à l'air et mis en surpression.

18. Concentrateur solaire selon la revendication 16, caractérisé en ce que celui-ci est doté d'un cadre (70) disposé de façon à pouvoir pivoter autour de son axe horizontal (45) et recouvert d'un côté par la bande réfléchissante (54) et de l'autre côté par une feuille transparente (56), lesdites feuilles (54, 56) délimitant un volume en surpression (57), l'échangeur de chaleur (50), fixé au cadre (70) de façon pivotante, étant disposé dans l'axe focal (69) de la bande réfléchissante (54) à l'extérieur du volume en surpression (57).

19. Concentrateur solaire selon l'une ou l'autre des revendications 16 ou 18, caractérisé en ce que le cadre (70) comporte deux bras (46) formant un angle identique (47) avec le plan du cadre et qui forment, au niveau du plan médian (48) perpendiculaire au cadre (70), un support (49) situé dans l'axe focal (69) de la bande réfléchissante (54), pour recevoir l'échangeur de chaleur (50).

20. Concentrateur solaire selon l'une quelconque des revendications 16, 18 ou 19, caractérisé en ce qu'il est prévu, pour faire pivoter et pour immobiliser le cadre (70) et l'échangeur de chaleur (50), un tube télescopique (51) dont une extrémité est fixée au sol en pouvant pivoter, l'autre extrémité étant fixée au cadre (70) en pouvant pivoter.

21. Concentrateur solaire selon la revendication 16, caractérisé en ce que celui-ci est doté d'un cadre en treillis (58) comportant d'un côté la feuille réfléchissante (59) et de l'autre côté une feuille de fermeture (60), l'espace intermédiaire fermé (61) entre les feuilles (59, 60) étant mis en dépression.

22. Concentrateur solaire selon la revendication 16, caractérisé en ce que celui-ci est doté d'une pièce support (64) en forme de tiroir, fermée sur trois côtés, pour recevoir la feuille réfléchissante (65), celle-ci étant maintenue par dépression dans la pièce support en forme de tiroir (64).

23. Concentrateur solaire selon la revendication 16, caractérisé en ce que celui-ci présente une construction en sandwich (66) recouverte par la feuille réfléchissante (67), de telle sorte qu'entre la feuille réfléchissante (67) et la face de la construction en sandwich située du côté de la feuille réfléchissante (67) soit constitué un espace fermé (68), dans lequel règne une dépression qui donne à la feuille réfléchissante (67) la forme recherchée.
